(19) Europäisches Patentamt / European Patent Office / Office européen des brevets

(11) **EP 2 493 989 B1**

(12) **FASCICULE DE BREVET EUROPEEN**

(45) Date de publication et mention
de la délivrance du brevet:
**13.06.2018 Bulletin 2018/24**

(21) Numéro de dépôt: **10787850.6**

(22) Date de dépôt: **26.10.2010**

(51) Int Cl.:
**C09D 5/02** *(2006.01)* **C08G 63/52** *(2006.01)*
**C09D 167/08** *(2006.01)*

(86) Numéro de dépôt international:
**PCT/FR2010/052288**

(87) Numéro de publication internationale:
**WO 2011/051612 (05.05.2011 Gazette 2011/18)**

(54) **RESINE ALKYDE D'ORIGINE NATURELLE ET EMULSION AQUEUSE D'UNE TELLE RESINE**

ALKYDHARZ VON NATÜRLICHEM URSPRUNG UND DESSEN WÄSSRIGE EMULSION

ALKYD RESIN OF NATURAL ORIGIN AND AQUEOUS EMULSION THEREOF

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.10.2009 FR 0905142**

(43) Date de publication de la demande:
**05.09.2012 Bulletin 2012/36**

(73) Titulaires:
• **Centre National de la Recherche Scientifique
(C.N.R.S.)**
**75794 Paris Cedex 16 (FR)**
• **D.V.I. Labo**
**27300 Bernay (FR)**

(72) Inventeurs:
• **HENRY, François**
**F-92340 Bourg-la-Reine (FR)**
• **VIEZ, Francis**
**F-27300 Saint-Aubin-le-Vertueux (FR)**

(74) Mandataire: **Schmidt, Martin Peter**
**IXAS Conseil**
**15, rue Emile Zola**
**69002 Lyon (FR)**

(56) Documents cités:
EP-A2- 0 741 175    WO-A2-2007/074333
GB-A- 587 566    US-A- 2 586 092
US-A- 3 438 795    US-A1- 2006 240 194

• VAN HAVEREN J ET AL: "Resins and additives
for powder coatings and alkyd paints, based on
renewable resources", JOURNAL OF COATINGS
TECHNOLOGY RESEARCH, SPRINGER NEW
YORK LLC, US, GB LNKD-
DOI:10.1007/S11998-007-9020-5, vol. 4, no. 2, 1
juin 2007 (2007-06-01), pages 177-186,
XP002539261, ISSN: 1945-9645
• SENIHA GÜNER F ET AL: "Polymers from
triglyceride oils", PROGRESS IN POLYMER
SCIENCE, PERGAMON PRESS, OXFORD, GB
LNKD-
DOI:10.1016/J.PROGPOLYMSCI.2006.07.001,
vol. 31, 1 juillet 2006 (2006-07-01), pages 633-670,
XP002560508, ISSN: 0079-6700 [extrait le
2006-08-28]

**Description**

La présente invention se rapporte de manière générale à une résine alkyde et à son procédé de préparation. La présente invention se rapporte également à la formulation d'une telle résine sous forme d'une émulsion en base aqueuse, et à son application dans des compositions de revêtement de surface du type peintures, vernis, lasures, colles et mastics.

Par résine alkyde, on entend, au sens de la présente invention, un polyester modifié aux huiles et/ou aux acides gras.

Les résines alkydes sont connues de l'homme du métier et des efforts ont été faits pour les formuler en émulsion aqueuse contenant très peu, voire ne contenant pas de composés organiques volatils, ce qui est particulièrement important dans le cadre d'applications de type revêtement surface (peintures, vernis, lasures, etc.).

Toutefois, ces résines alkydes présentent l'inconvénient d'être synthétisées à partir, notamment, de produits issus de l'industrie pétrochimique ou carbochimique, en particulier à partir d'acides organiques d'origine pétrolière (par exemple à partir d'anhydride phtalique).

Ces résines alkydes sont typiquement formulées soit sous forme de solution en phase solvant (comme le White spirit, le xylène, le solvant naphta ou le toluène), soit sous forme d'émulsions aqueuses, avant d'être incorporées dans des compositions de peintures (en l'occurrence mélangées avec des pigments et/ou des charges), de vernis, ou de lasures. Dans ces émulsions, les résines alkydes sont dispersées dans la phase aqueuse de manière aussi uniforme et fine que possible, et pour cela il est nécessaire d'utiliser des émulsifiants (ou émulsionnants ou tensio-actifs), qui sont généralement d'origine fossile.

De tels produits issus de l'industrie pétrochimique ou carbochimique présentent de nombreux inconvénients, dont ceux notamment d'être difficilement recyclables ou régénérables et de participer à la diminution des réserves fossiles.

Pour pallier ces inconvénients, il existe depuis plusieurs années des peintures à base d'huiles végétales qui, certes, sont naturelles, mais possèdent des performances limitées, notamment au niveau des temps de séchage et de durcissement, qui sont trop longs, en raison notamment d'une masse molaire trop faible et aussi d'un indice de siccativité (associé à la longueur théorique en huile et au type d'huile) trop faible également.

Par longueur théorique en huile, on entend, au sens de la présente invention la teneur en acides gras, c'est-à-dire le poids en acides gras par rapport au poids de la résine (usuellement appelée résine masse).

La demanderesse a donc mis au point la synthèse de résines alkydes à partir de produits naturels, en particulier à partir de polyacides d'origine naturelle, mais aussi de polyalcools et d'huiles siccatives ou semi-siccatives d'origine naturelle.

Ces résines alkydes, rendues suffisamment fluides par chauffage conventionnel à 80°C, sont ensuite dispersées dans l'eau afin de former une émulsion de type eau dans huile (E/H). Cette émulsion E/H va s'inverser par rajout d'eau pour former une émulsion de type huile dans eau (H/E). Ce procédé qui consiste à mettre les résines alkydes sous forme d'émulsion aqueuse est un procédé dit d'inversion d'émulsion à chaud, qui est décrit de manière détaillée dans les exemples ci-après. Ce procédé d'inversion d'émulsion à chaud met en oeuvre des émulsionnants appropriés, qui sont soit d'origine fossile, soit d'origine naturelle (végétale ou animale)

Plus particulièrement, la présente invention a pour objet une résine alkyde, caractérisée en ce qu'elle est synthétisée à partir de produits d'origine naturelle, et en ce qu'elle présente :

- un indice de polydispersité $I_p$ compris entre 1 et 20,
- une masse molaire moyenne en poids $M_p$ comprise entre 3000 g/mol et 100000 g/mol,
- un indice d'acide compris entre 5 et 15,
- une viscosité dynamique comprise entre 10 et 50 dPa.s à 80°C, et
- une longueur moyenne théorique en huile comprise entre 25% et 75%.

De préférence, la résine alkyde selon l'invention présente une longueur moyenne théorique en huile comprise entre 25% et 65%.

De préférence, la résine alkyde selon l'invention présente une masse molaire moyenne en poids $M_p$ comprise entre 3000 g/mol et 70000 g/mol, pour faciliter la réalisation d'une émulsion de la résine dans l'eau.

Par produit d'origine naturelle, on entend, au sens de la présente invention, tout produit d'origine végétale ou animale qui n'est pas d'origine fossile et/ou ne contient pas du tout de produit d'origine fossile.

Par produit d'origine fossile, on entend, au sens de la présente invention, tout produit organique d'origine fossile issu du pétrole, du charbon ou de leurs dérivés (issus de l'industrie pétrolière ou du charbon).

Par indice de polydispersité, on entend, au sens de la présente invention le rapport $I_p$ de la masse molaire moyenne en poids $M_p$ (sensible aux fortes masses) sur la masse molaire moyenne en nombre $M_n$ (sensible aux faibles masses) :

$$I_p = M_p/M_n$$

$M_p$, $M_n$ et $I_p$ sont obtenus après chromatographie dite d'exclusion stérique d'une solution de la résine après passage de celle-ci sur colonne de gel. Cet indice Ip donne une indication de l'étendue de la distribution des masses molaires des différentes macromolécules au sein d'un polymère. Pour un polymère parfait, où toutes les macromolécules auraient même longueur (et donc une même masse molaire), $I_p$ serait égal à 1.

Par indice d'acide, on entend, au sens de la présente invention, un indice caractérisant l'acidité de la résine. De manière courante, cet indice correspond au nombre de milligrammes d'hydroxyde de potassium nécessaires pour neutraliser un gramme d'échantillon de résine. Avant la réaction, l'indice d'acide correspond à celui du polyacide utilisé.

Par viscosité dynamique, on entend, au sens de la présente invention, la viscosité dynamique « dite chute de bille à 80°C » mesurée à l'aide d'un viscosimètre Brookfield, avec un tube ayant 1 cm$^2$ de section contenant la résine chauffée à 80°C et une bille en acier ayant un diamètre de 2 mm. La viscosité est déterminée par la mesure du temps de chute (en secondes) de la bille dans la résine, sur une distance de 10 cm. Le fait que la résine soit synthétisée à partir de produits végétaux n'exclut *a priori* pas que des produits d'origine fossile participent, en qualité de trace, à la réaction de polycondensation à raison d'au plus 1% (g/g), et de préférence d'au plus 0,1 % (g/g) par rapport au poids total des produits réactionnels, c'est-à-dire de la résine (ou « résine masse »).

Les résines alkyde selon l'invention, qui présentent notamment un indice de polydispersité $I_p$ compris entre 1 et 20 et une masse molaire moyenne en poids $M_p$ comprise entre 3000 et 100000 g/mol peuvent être émulsionnées à chaud dans l'eau.

Si la résine alkyde présente une masse molaire supérieure à 100000 g/mol, il est très difficile, voire impossible de l'émulsionner dans l'eau.

Si la résine alkyde présente une masse molaire moyenne en poids inférieure à 3000 g/mol, elle conduit à un séchage très lent de la peinture qui la contient sous forme d'émulsion aqueuse (le temps ouvert de la peinture augmente, son durcissement est très lent). Lorsqu'on applique une telle peinture sur une surface donnée appropriée, on obtient un film « mou »

Si la résine alkyde présente un indice de polydispersité $I_p$ supérieur à 20, elle conduit d'abord à une difficulté de l'émulsionner parfaitement dans l'eau, et en conséquence introduit une inhomogénéité des propriétés de la peinture qui la contient sous forme d'émulsion aqueuse.

Ainsi, la maîtrise simultanée, à température du milieu réactionnel la plus homogène possible, de la masse molaire et de son indice de polydispersité, tous deux contrôlées par l'action retard d'un catalyseur rupteur de chaînes macromoléculaires comme un polyacide carboxylique d'origine naturelle, permet d'obtenir des résines couvrant une longueur moyenne en huile de 25 % à 75%, tout en respectant un indice d'acide compris entre 5 et 15 et une viscosité dynamique comprise entre 10 et 50 dPa.s à 80°C.

De préférence, la résine alkyde selon l'invention est synthétisée à partir exclusivement de produits d'origine naturelle. Une telle résine, entièrement naturelle, est donc intrinsèquement biodégradable (selon le protocole OCDE 201D) et participe donc au développement durable. Cette résine alkyde entièrement naturelle présente en outre, lorsqu'elle est formulée dans une composition de type peinture, lasure, vernis, colle ou mastic, les mêmes propriétés mécaniques, de résistance aux conditions climatiques et aux agressions chimiques que des résines synthétisées à partir de produits essentiellement d'origine fossile.

De préférence, la résine alkyde selon l'invention est exempte de métaux lourds.

Par métal lourd, on entend au sens de la présente invention tout composé d'antimoine, d'arsenic, de cadmium, de chrome (VI), de cuivre, de plomb, de mercure, de nickel, de sélénium, de tellure, de thallium et d'étain ainsi que ces matériaux sous forme métallique.

La présente invention a également pour projet un procédé de préparation d'une résine alkyde naturelle selon l'invention, par polycondensation de produits de départ comprenant au moins un polyol, au moins un polyacide et au moins une huile ou un acide gras, caractérisé en ce que :

> o l'huile est choisie parmi les huiles végétales siccatives et/ou semi-siccatives, et l'acide gras est choisi parmi les acides gras entrant dans la composition desdites huiles végétales siccatives et/ou semi-siccatives,
> o le polyacide est d'origine naturelle,
> o le polyol est d'origine naturelle,

et en ce que lesdits produits de départ sont mélangés dynamiquement en continu à une température comprise entre 180°C et 220°C, jusqu'à formation de la résine alkyde modifiée.

Pendant la polycondensation, il est important que la fonctionnalité effective du milieu réactionnel reste toujours inférieure à 2 pour éviter la gélification.

Par fonctionnalité effective d'un composé, on entend, au sens de la présente invention, le nombre de groupes réactifs présents par molécule de ce composé.

Par fonctionnalité effective d'une résine alkyde, on entend, au sens de la présente invention, la fonctionnalité effective moyenne du mélange réactionnel (mélange des réactifs ou produits de départ) conduisant à cette résine définie comme suit

$$F = \frac{\text{nombre total de groupes fonctionnels utilisés}}{\text{nombre total de molécules}}$$

Pour formuler une résine alkyde, il est important de connaître la fonctionnalité moyenne du mélange réactionnel, qui permet de déterminer si celui-ci risque ou non de conduire à un produit gélifié. Typiquement, au dessus d'une fonctionnalité effective de 2, on obtient un produit gélifié, ce qu'il convient d'éviter.

Par siccativité d'une huile, on entend, au sens de la présente invention son aptitude à sécher en présence de l'oxygène de l'air, cette aptitude est d'autant plus marquée que le nombre d'insaturations (ou de doubles liaisons) présentes dans la structure de l'huile est élevé.

Typiquement, une huile entrant dans la composition finale d'une résine alkyde contenant des acides gras mono-insaturés (une seule double liaison) conférera à cette dernière un caractère semi-siccatif. Si les acides gras sont polyinsaturés (deux et trois doubles liaisons) la résine obtenue sera alors siccative.

De préférence, les produits de départ mis en oeuvre dans le procédé selon l'invention sont exempts de métaux lourds.

Selon un premier mode de réalisation avantageux du procédé de l'invention, les produits de départ comportent au moins une huile siccative choisie dans le groupe constitué par l'huile de lin, l'huile de bois de chine, l'huile d'oiticica.

Selon un premier mode de réalisation avantageux du procédé de l'invention, les produits de départ comportent au moins une huile semi-siccative choisie dans le groupe constitué par l'huile de soja, l'huile de tournesol, l'huile de carthame, l'huile de pépin de raisin, l'huile de carnauba, ou l'huile de calandula.

Selon un premier mode de réalisation avantageux du procédé de l'invention, les produits de départ comportent au moins un acide gras entrant dans la composition d'une huile végétale semi-siccative choisie dans le groupe constitué par l'acide oléique, huile végétale semi-siccative choisie dans le groupe constitué par l'acide oléique, l'acide linoléique, et l'acide linolénique.

Les produits de départ participant à la synthèse de la résine alkyde selon l'invention comprennent, outre les huiles ou acides gras, au moins un polyacide et au moins un polyol.

Avantageusement, le polyacide est choisi parmi les oligomères d'acide gras végétal, en particulier un dimère ou un trimère d'acides gras végétal, l'acide succinique ($(C_4H_6O_4)$ de masse molaire 118 g/mol) ou l'acide adipique ($C_6H_{10}O_4$ de masse molaire 146,14 g/mol).

A titre d'acide gras di-fonctionnel utilisable dans le procédé de l'invention, on conseillera le PRIPOL 1017 (masse molaire de 560 g/mol).

A titre d'acide gras trifonctionnel utilisable dans le procédé de l'invention, on conseillera le PRIPOL 1040 (masse molaire de 890 g/mol).

Avantageusement, le polyol est choisi parmi le glycérol et le sorbitol.

Afin d'optimiser les caractéristiques de la résine alkyde végétale finale (notamment la masse molaire moyenne en poids $M_p$ et l'indice de polydispersité), on utilise de préférence, dans le procédé selon l'invention, un catalyseur bloqueur de chaine également d'origine végétale ou minérale (en quantité catalytique de l'ordre de 1%), qui est de préférence plutôt introduit en fin de réaction.

Avantageusement, le catalyseur bloqueur de chaine est un acide carboxylique et/ou un polyester carboxylique, qui sont de préférence choisis dans le groupe constitué par l'acide lactique, l'acide gluconique et par le poly(acide lactique) qui, à 220°C se dépolymérise en acide lactique monomère.

La présente invention a encore pour objet une émulsion aqueuse d'une résine alkyde caractérisée en ce qu'elle comporte :

○ une résine alkyde végétale selon l'invention telle que définie précédemment, et
○ au moins un émulsifiant d'origine fossile ou d'origine naturelle.

Il s'agit d'une émulsion essentiellement d'origine naturelle, qui s'obtient par un procédé d'inversion d'émulsion à chaud, tel que décrit précédemment et ci-après dans les exemples.

Par émulsion d'origine essentiellement naturelle, on entend, au sens de la présente invention, toute émulsion d'origine végétale ou animale qui ne comporte qu'au plus 1% (g/g), et de préférence au plus à 0,1% (g/g) par rapport à la masse de produit d'origine fossile.

Par émulsifiant (ou émulsionnant), on entend, au sens de la présente invention, tout produit ou mélange de produits permettant ou favorisant la formation d'une émulsion.

L'émulsifiant peut être soit d'origine fossile, soit d'origine naturelle. Dans les deux cas, il est présent dans l'émulsion aqueuse à raison de 1% à 6% (g/g) en masse par rapport à la masse totale de l'émulsion.

Dans le cas particulièrement avantageux où la résine alkyde selon l'invention est synthétisée à partir exclusivement de produits d'origine naturelle, on peut tolérer une quantité plus importante d'émulsionnant d'origine fossile que si ce n'était pas le cas.

A titre d'émulsifiants utilisables dans l'émulsion selon l'invention, on conseille la gomme arabique, les amidons modifiés (notamment l'amidon substitué par un groupement octényl succinate), la caséine, la gélatine, et la β-cyclodextrine, et le mélange de sulfonate d'alkyl aryle et la paraffine.

L'émulsion aqueuse de résine alkyde selon l'invention peut être avantageusement formulée dans une composition aqueuse de peinture ou de revêtement de surface (du type vernis, lasures, colles ou mastics par exemple).

Enfin, la présente invention a encore pour objet une composition aqueuse de peinture ou de revêtement de surface, caractérisée en ce qu'elle comporte une émulsion aqueuse de résine alkyde selon l'invention.

Dans le cas d'une composition de peinture, le type d'application envisagée dépend de la longueur théorique en huile de la résine alkyde contenue dans la peinture.

Pour une longueur théorique en huile comprise entre 38% et 42%, la composition de peinture selon l'invention est une composition de peinture mate murale (intérieure et extérieure) ou pour plafonds.

Pour une longueur théorique en huile comprise entre 33% et 38%, la composition de peinture selon l'invention est une peinture satinée ou pour huisseries (en bois ou en métal).

Pour une longueur théorique en huile comprise entre 25% et 55%, la composition de peinture selon l'invention est une peinture de revêtement de sols ou pour bandes routières.

Toutes les valeurs de longueur théorique en huile sont données à plus ou moins 10 %, compte tenu de la perte en doubles liaisons au cours de la synthèse à 220°C en moyenne (voir tableau n°2 de l'exemple 3).

Dans le cas d'une composition de peinture, la composition selon l'invention comprend typiquement au moins un des ingrédients classiquement utilisés dans le domaine des peintures, et en particulier des pigments ou des charges.

A titre de pigments utilisables dans les compositions de peinture selon l'invention, on peut notamment citer :

- des pigments d'origine naturelle tels que le dioxyde de titane, les oxyde de fer, le noir de carbone, le jaune de gaude, le bleu pastel, et le rouge garance ; et
- des pigments de synthèse issus de sources fossiles tels que le bleu et le vert de phtalocyanine, le jaune azoïque, et le rouge quinachridone.

A titre de charges utilisables dans le procédé selon l'invention, on conseille les charges d'origine naturelle, qu'elles soient végétales ou animales.

A titre de charges d'origine naturelle minérale, on peut notamment citer les carbonates de calcium, le talc, la silice.

A titre de charges d'origine naturelle végétale ou animale, on peut notamment citer la cire d'abeille et la cire de carnauba.

Les quantités de ces différents ingrédients sont celles classiquement utilisées dans les applications concernées. Ainsi par exemple, pour une application de type peinture, la quantité de pigments dans la composition de peinture selon l'invention est comprise entre 0,01% et 80% en poids par rapport au poids total de la composition

Bien entendu, l'homme du métier veillera à choisir les éventuels ingrédients complémentaires et/ou leur quantité de manière telle que les propriétés avantageuse de la résine alkyde selon l'invention ne soient pas, ou substantiellement pas altérées par l'adjonction envisagée.

Dans les exemples suivants, sauf indication contraires, toutes les quantités sont exprimées en parties en poids/pourcentage massique.

## EXEMPLES

Produits utilisés pour la synthèse des résines alkydes

**Polyol** :

- glycérol ou glycérine ($C_3H_8O_3$) ou encore propan-1,2,3-triol (ou 1,2,3-propanetriol) selon la nomenclature officielle : c'est un triol (3 fonctions alcool) de masse molaire 92,09 g/mol ; il se présente sous la forme d'un liquide transparent, visqueux, incolore, inodore, non toxique et au goût sucré.

- sorbitol ($C_6H_{14}O_6$) : c'est un hydrate de carbone d'origine végétale, qui possède six fonctions alcools, et sa masse moléculaire est de 182,17g/mol.

**Polyacides** :

- PRIPOL 1017 commercialisé par UNIQEMA : c'est un dimère d'acide gras de masse molaire 560 g/mol.
- PRIPOL 1040 commercialisé par UNIQEMA : c'est un dimère d'acide gras de masse molaire 890 g/mol.
- Acide adipique ($C_6H_{10}O_4$) de masse molaire 146,14 g/mol.
- l'acide succinique (($C_4H_6O_4$) de masse molaire 118 g/mol).

**Huile** :

Huile de tournesol :

Il s'agit d'un triglycéride : ester du glycérol avec des acides gras saturés et insaturés tels que :

- 3 à 7 (10)% d'acide gras saturé : l'acide palmitique,

- 4 à 6 (1 à 10)% d'acide gras saturé : l'acide stéarique,

- 15 à 25 (14 à 37)% d'acide gras mono-insaturé ; l'acide oléique,

- 62 à 70 (51.5 à 75)% d'acide gras bi-insaturé : l'acide linoléique,

- Traces d'acide gras tri-insaturé : l'acide linolénique,

- > de 3% d'autres acides.

Dans l'huile de tournesol utilisée, il y a pour 100 g d'huile :

- 12 g d'acides gras saturés,
- 20 g acides gras mono-insaturés, et
- 68 g de polyinsaturés.

**Catalyseur de polycondensation** :

$$Ca(OH)_2$$

Produits utilisés pour l'émulsification en base aqueuse des résines alkydes

**Emulsionnants** :

- mélange de sulfonate d'alkyl aryle et de paraffine
- β-cyclodextrine

Montage expérimental utilisé pour la synthèse des résines d'alkydes selon le procédé de l'invention

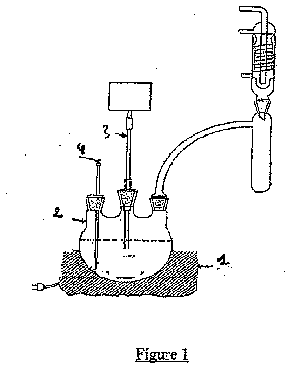

Pour la préparation des résines alkydes selon le procédé de l'invention, on utilise un bain de sel 1, dans lequel plonge un réacteur tricol 2 de 100 ml ou de 250 ml en fonction des quantités de réactifs engagées. On introduit ainsi dans le réacteur 2, les quantités de produits préalablement calculées. Le mélange est placé sous agitation (à l'aide d'un agitateur axial tripale 3 durant toute la réaction et la réaction se fait sous azote (pour éviter l'oxydation). Un thermomètre 4 permet de contrôler en continu la température de la réaction. Ce montage est illustré sur la figure 1.

Essais réalisés

**Mesure de l'indice d'acide**

Cet indice permet de connaître l'acidité de la résine. Par définition, l'indice d'acide est le nombre de milligramme d'hydroxyde de potassium nécessaires pour neutraliser un gramme d'échantillon de résine. Avant la réaction, l'indice d'acide correspond à celui du polyacide utilisé.

On détermine l'indice d'acide comme suit, selon la formule :

$$\text{Indice d'acide} = (56,1 \text{ x a x N}) / P$$

avec :

a = ml de solution alcoolique d'hydroxyde de potassium,
N = normalité de la solution alcoolique (typiquement de l'alcool éthylique à 95%) d'hydroxyde de potassium,
p = masse de l'échantillon en grammes.

**Mesure de la masse molaire de la résine alkyde**

La masse molaire moyenne des résines alkydes synthétisées selon le procédé de l'invention sont déterminées par chromatographie d'exclusion stérique (SEC), qui est une méthode de chromatographie en phase liquide.

Pour la détermination de la masse molaire de la résine, on procède comme suit :

○ après élaboration de la résine, on prélève de la résine, et
○ on dissout ce prélèvement dans du chloroforme avec une concentration de 0,2 g/mol, puis
○ on analyse l'échantillon ainsi obtenu par chromatographie d'exclusion stérique (ou SEC).

EXEMPLE 1

On utilise un réacteur de laboratoire de 250 ml, chauffé à 220°C sous flux d'azote, dans lequel ont été introduits les produits réactionnels suivants :

• 56,7 g de Pripol 1017,

• 38 g d'un monoacide issu de l'huile de tournesol de masse molaire égale à 282 g/mol,

• 10,5 g de glycérol, et

• 0,16 g de $Ca(OH)_2$ ,

Ce mélange réactionnel est caractérisé par :

○ une longueur théorique en huile ($LH_{th}$) de 38,3% et
○ une fonctionnalité effective de 1,926.

Après un chauffage à 220°C pendant 4 à 5 heures on obtient une résine alkyde se présentant, sous forme d'un liquide de couleur clair visqueux ayant l'aspect d'un miel, et présentant les propriétés suivantes :

○ indice d'acide autour de 15.
○ masse molaire moyenne en poids $M_p$ entre 3000 g/mol et 15000 g/mol,
○ indice de polydispersité d'environ 4.

Pendant toute la durée de la polycondensation, on a vérifié qu'avec une fonctionnalité effective ($f_{eff}$) initiale du milieu réactionnel inférieure à 2, il n'y a pas de gélification du milieu réactionnel.

Cette gamme de masse molaire obtenue permet d'émulsionner à chaud (80°C) cette résine dans l'eau en présence de tensioactifs naturels et selon le procédé d'inversion d'émulsion d'eau dans l'huile (E/H) à l'huile dans l'eau (H/E). L'extrait sec de cette émulsion se situe entre 40 et 60 %.

Enfin, la viscosité Brookfield selon la norme ISO 2884-2 est de 1,25 Pas (vitesse 12 Tige 2), la viscosité brookfield étant la mesure de la résistance mécanique d'un mobile (dit tige : ici tige 2) trempé dans liquide tournant à vitesse constante (dit vitesse : ici vitesse 12) sur lui-même.

### EXEMPLE 2

La même réaction d'estérification qu'à l'exemple 1 a pu être réalisée à l'échelle industrielle en passant du réacteur de laboratoire initial de 250 ml à un réacteur industriel de 100 kg, dans lequel ont été introduits les produits réactionnels dans les mêmes proportions mais en de l'échelle du gramme au kilogramme, et cela sans modification majeure du protocole de synthèse et des produits réactionnels mis en oeuvre.

### EXEMPLE 3

On utilise un réacteur de laboratoire de 100 ml, chauffé à 180°C sous flux d'azote, dans lequel ont été introduits les produits réactionnels suivants :

- 31,5 g de Pripol 1040,
- 60 g d'un monoacide issu de l'huile de tournesol de masse molaire égale à 282 g/mol,
- 9,8 g de glycérol, et
- du $Ca(OH)_2$ en quantité catalytique (environ 1% (g/g)),

Ce mélange réactionnel est caractérisé par :

○ une longueur théorique en huile ($LH_{th}$) de 63,21% et
○ une fonctionnalité effective ($f_{eff}$) de 1,8

Les données initiales du mélange réactionnel sont récapitulées dans le tableau 1 ci-dessous :

Tableau 1

| PRODUITS | Mp (g/mol) | fonction. | quantité (g) | n (mole) | Equiv. (exp.) | Eau dég. (g) | Stoech. (exp) |
|---|---|---|---|---|---|---|---|
| PRIPOL 1040 | 890 | 3 | 31,5 | 0,03539 | 0,10618 | 0,63708 | 1,00 |
| AcG Tournesol | 282 | 1 | 60 | 0,21277 | 0,21277 | 3,82979 | 6,01 |
| GLYCEROL | 92 | 3 | 9,8 | 0,10652 | 0,31957 | 1,91739 | 3,01 |
| $f_{eff}$ =1,80 $H_{ind}$=0,37 | $OH_{excess}$ = 57,075 | $LH_{th}$ = 63,21 % | total = 101,3 | $mole_{tot}$ = 0,35468 | EqaC=0,31895 EqaL=0,31957 | $m_{H2O}$ = 6,384 | $Rd_{th}$ = 93,70 % |

nmtaL = nb total de moles en alcools nmtaC = nb total de moles en acides

$$\text{Equivalent total en alcool} \rightarrow EqT_{aL} = \sum_{alcool} nmol_{aL} * Fonctionnalité_{aL}$$

$$\text{Equivalent total en acide} \rightarrow EqT_{aC} = \sum_{acide} nmol_{aC} * Fonctionnalité_{aC}$$

$m_{aCG}$ = poids en acide gras OHexc = (1-$EqT_{aL}$/$EqT_{aC}$) *100; Excès d'Hydroxyle en %

Rdth = ($M_{tot}$-$mole_{tot}$*18) / $P_{tot}$ Rendement théorique

LHth = 100*$m_{acG}$/ ($M_{tot}$-$mole_{tot}$*18); Longueur en Huile théorique Hind = ($EqT_{aL}$-$EqT_{aC}$) *56100/100; Indice d'Hydroxyle

EP 2 493 989 B1

Après un chauffage à 180°C pendant 3h30', on obtient une résine alkyde présentant les propriétés suivantes :

- ◦ indice d'acide autour de 12,
- ◦ masse molaire moyenne en poids de 8629,2 g/mol,
- ◦ indice de polydispersité de 3,8, et
- ◦ couleur ocre entre claire et foncée.

Les propriétés de la résine alkyde obtenue sont récapitulées dans le tableau 2 ci-après :

Tableau 2

| T (°C) | Vit. Agit (tr/min) | Durée (h) | $IA_{in}$ | $IA_f$ | acid. résid (%) | Indice Iode | % doubles liaisons restantes | Quantité d'eau (g) | Visc (s) | Mp | Ip |
|---|---|---|---|---|---|---|---|---|---|---|---|
| 198 | 330 | 9 | 219 | 12 | 16 | 103,4 | 82,51 | 2.6 | 4 | 8629,2 | 3,8 |

Vit.agit = vitesse d'agitation en nombre de tours par minute.
Durée (h) = durée de la réaction de polycondensation
IA = mg de potasse nécessaire pour neutraliser 1g de résine.
$IA_{in}$ = indice d'acide initial avant chauffage.
$IA_f$ = indice d'acide après l'arrêt de la réaction.
Acid. résid. = acidité résiduelle qui correspond au pourcentage d'acide restant : $IA_f / IA_{in}$
% double liaisons restants = c'est le rapport de l'indice d'iode de la résine sur l'indice d'iode de l'acide gras (125,23) considéré comme l'indice d'iode initial.
Visc = Viscosité en nombre de secondes nécessaires à une bille normalisée pour chuter de 10cm dans un tube à essai calibré, contenant la résine à testée maintenue à 80°C.

Pendant toute la durée de la polycondensation, on a vérifié qu'avec une fonctionnalité effective ($f_{eff}$ = 1,8) initiale du milieu réactionnel inférieure à 2, il n'y a pas de gélification du milieu réactionnel.

Cette masse molaire obtenue permet d'émulsionner à chaud (80°C) cette résine dans l'eau en présence de tensioactifs naturels et selon le procédé d'inversion d'émulsion d'eau dans l'huile (E/H) à l'huile dans l'eau (H/E) .

EXEMPLE 4

On utilise un réacteur de laboratoire de 250 ml, chauffé à une température comprise 185°C et 198°C sous flux d'azote, dans lequel ont été introduits les produits réactionnels suivants :

- • 42 g de Pripol 1040,
- • 40 g d'un monoacide issu de l'huile de tournesol de masse molaire égale à 282 g/mol,
- • 10,85 g de glycérol, et
- • du $Ca(OH)_2$ en quantité catalytique,

Ce mélange réactionnel est caractérisé par :

- ◦ une longueur théorique en huile ($LH_{th}$) de 45,81% et
- ◦ une fonctionnalité effective ($f_{eff}$) de 1,847.

Les données initiales du mélange réactionnel sont récapitulées dans le tableau 3 ci-dessous :

Tableau 3

| PRODUITS | Mw (g/mol) | fonction. | Poids (g) | n (mole) | Equiv. (exp.) | Eau dég. (g) | Stoech. (exp) |
|---|---|---|---|---|---|---|---|
| PRIPOL 1040 | 890 | 3 | 42 | 0,04719 | 0,14157 | 0,84944 | 1,00 |
| AcGTournesol | 282 | 1 | 40 | 0,14184 | 0,14184 | 2,55319 | 3,01 |
| GLYCEROL | 92 | 3 | 10,85 | 0,11793 | 0,3538 | 2,12283 | 2,50 |
| $f_{eff}$ =1,847 | $OH_{excess}$ = | $LH_{th}$ = | $P_{tot}$ = | $mole_{tot}$ = | EqaC=0,28342 | $m_{H2O}$ = | $Rd_{th}$ = |

(suite)

| PRODUITS | Mw (g/mol) | fonction. | Poids (g) | n (mole) | Equiv. (exp.) | Eau dég. (g) | Stoech. (exp) |
|---|---|---|---|---|---|---|---|
| $H_{ind}$=45, 22 | 37,61 % | 45,81 % | 92,85 | 0,30697 | EqaL=0,3538 | 5,52546 | 94,05 % |

Après un chauffage entre 185°C et 198°C, pendant 5h20', on obtient une résine alkyde présentant les propriétés suivantes :

◦ indice d'acide autour de 11.
◦ masse molaire moyenne en poids de 3372,7 g/mol,
◦ indice de polydispersité de 3,12.
◦ couleur ocre
◦ aspect limpide

Les propriétés de la résine alkyde obtenue sont récapitulées dans le tableau 4 ci-après :

Tableau 4

| T (°C) | Vit. Agit (tr/min) | Durée (h) | $IA_{in}$ | $IA_f$ | acid. résid (%) | Indice Iode | % doubles liaisons restantes | Quantité d'eau (g) | Visc (s) | Mp | lp |
|---|---|---|---|---|---|---|---|---|---|---|---|
| 185 à 198 | 342 | 5h 20 | 168 | 11 | 6,5 | 105,6 | 84,27 | 2.3 | 31 | 3372,7 | 3,12 |

Pendant toute la durée de la polycondensation, on a vérifié qu'avec une fonctionnalité effective ($f_{eff}$) initiale du milieu réactionnel inférieure à 2 ($f_{eff}$ de 1,847), il n'y a pas de gélification du milieu réactionnel.

Cette masse molaire obtenue permet d'émulsionner à chaud (80°C) cette résine dans l'eau en présence de tensioactifs naturels et selon le procédé d'inversion d'émulsion d'eau dans l'huile (E/H) à l'huile dans l'eau (H/E).

EXEMPLE 5

On utilise un réacteur de laboratoire de 100 ml, chauffé à une température comprise entre 190 et 215°C sous flux d'azote, dans lequel ont été introduits les produits réactionnels suivants :

• 20,6 g d'acide adipique,

• 40 g d'un monoacide issu de l'huile de tournesol de masse molaire égale à 282 g/mol,

• 19,57 g de glycérol, et

• du $Ca(OH)_2$ en quantité catalytique,

Ce mélange réactionnel est caractérisé par :

◦ une longueur théorique en huile ($LH_{th}$) de 56,01% et
◦ une fonctionnalité effective ($f_{eff}$) de 1,668.

Les données initiales du mélange réactionnel sont récapitulées dans le tableau 5 ci-dessous :

Tableau 5

| PRODUITS | Mw (g/mol) | fonction. | Poids (g) | n (mole) | Equiv. (exp.) | Eau dég. (g) | Stoech. (exp) |
|---|---|---|---|---|---|---|---|
| A.adipique | 156,14 | 2 | 20,6 | 0,1319 | 0,2639 | 2,3748 | 1,00 |
| AcGTournesol | 282 | 1 | 40 | 0,1418 | 0,1418 | 2,5532 | 1,08 |
| GLYCEROL | 92 | 3 | 19,57 | 0,2127 | 0,6382 | 3,8289 | 1,61 |

(suite)

| PRODUITS | Mw (g/mol) | fonction. | Poids (g) | n (mole) | Equiv. (exp.) | Eau dég. (g) | Stoech. (exp) |
|---|---|---|---|---|---|---|---|
| $f_{eff}$ =1,668 | $OH_{exces}$ = | $LH_{th}$ = | $P_{tot}$ = | $mole_{tot}$ = | EqaC=0,4057 | $m_{H2O}$ = | $Rd_{th}$ = |
| $H_{ind}$=182, 6 | 22,30 % | 56,0 % | 80,17 | 0,4865 | EqaL=0,6382 | 8,7569 | 89,08 % |

Après un chauffage entre 190°C et 215°C, pendant 4h, on obtient une résine alkyde présentant les propriétés suivantes :

  ◦ indice d'acide autour de 6.

  ◦ masse molaire moyenne en poids de 4728 g/mol,

  ◦ indice de polydispersité de 2,4.

  ◦ aspect : limpide

  ◦ couleur : ocre clair

Les propriétés de la résine alkyde obtenue sont récapitulées dans le tableau 6 ci-dessous :

Tableau 6

| T (°C) | Vit. Agit tr/min | Durée (h) | $IA_{in}$ | $IA_f$ | acid. résid (%) | Indice Iode | % doubles liaisons restantes | quantité d'eau (g) | Visc (s) | Mp | Ip |
|---|---|---|---|---|---|---|---|---|---|---|---|
| 190 à 215 | 335 | 4h | 272 | 6 | 2,3 | 80.6 | 64,3 | 6.4 | 2 | 4728 | 2,4 |

Pendant toute la durée de la polycondensation, on a vérifié qu'avec une fonctionnalité effective ($f_{eff}$) initiale du milieu réactionnel inférieure à 2 ($f_{eff}$ de 1,668), il n'y a pas de gélification du milieu réactionnel.

Cette masse molaire obtenue permet d'émulsionner à chaud (80°C) cette résine dans l'eau en présence de tensioactifs naturels et selon le procédé d'inversion d'émulsion d'eau dans l'huile (E/H) à l'huile dans l'eau (H/E).

EXEMPLE 6

On utilise un réacteur de laboratoire de 250 ml, chauffé à 200°C sous flux d'azote, dans lequel ont été introduits les produits réactionnels suivants :

• 25 g de Pripol 1040,
• 16,5g d'acide adipique,
• 40 g d'un monoacide issu de l'huile de tournesol de masse molaire égale à 282 g/mol,
• 16,5 g de glycérol, et
• du Ca(OH$_2$ en quantité catalytique (de l'ordre de 1,4 g),

Ce mélange réactionnel est caractérisé par :

  ◦ une longueur théorique en huile ($LH_{th}$) de 43,41% et
  ◦ une fonctionnalité effective ($f_{eff}$) de 1,824.

Les données initiales du mélange réactionnel sont récapitulées dans le tableau 7 ci-après :

Tableau 7

| PRODUITS | Mw (g/mol) | fonction. | Poids (g) | n (mole) | Equiv. (exp.) | Eau dég. (g) | Stoech. (exp) |
|---|---|---|---|---|---|---|---|
| PRIPOL 1040 | 890 | 3 | 25 | 0,02809 | 0,08427 | 0,5056 | 1,00 |
| AcGTournesol | 282 | 1 | 40 | 0,1418 | 0,1418 | 2,5532 | 5,05 |
| A.adipique | 146,14 | 2 | 16,5 | 0,1129 | 0,2258 | 2,0323 | 4,02 |
| GLYCEROL | 92 | 3 | 19,57 | 0,2127 | 0,6382 | 3,8289 | 7,57 |
| $f_{eff}$ =1,824 | $OH_{excess}$ | $LH_{th}$ = | $P_{tot}$ = | $mole_{tot}$ = | EqaC=0,4519 | $m_{H2O}$ = | $Rd_{th}$ = |
| $H_{ind}$=113, 4 | 24,79% | **43,4 %** | 101,07 | 0,4956 | EqaL=0,63815 | 8,920 | 91,17 % |

Après un chauffage 200°C, pendant 5h20', on obtient une résine alkyde présentant les propriétés suivantes :,

◦ indice d'acide autour de 13,5.

◦ masse molaire moyenne en poids de 6475 g/mol,

◦ indice de polydispersité de 3,14

◦ couleur ocre un peu foncé

Les propriétés de la résine alkyde obtenue sont récapitulées dans le tableau 8 ci-dessous :

Tableau 8

| T (°C) | Vit. Agit tr/min | Durée (h) | $IA_{in}$ | $IA_f$ | acid. résid (%) | Indice Iode | % doubles liaisons restantes | quantité d'eau (g) | Visc (s) | Mp | lp |
|---|---|---|---|---|---|---|---|---|---|---|---|
| 200 | 342 | 2h38 | 142,8 | 13,5 | 9,4 | 98,2 | 78,4 | 6,6 | 5 | 6475 | 3,14 |

Pendant toute la durée de la polycondensation, on a vérifié qu'avec une fonctionnalité effective ($f_{eff}$) initiale du milieu réactionnel inférieure à 2 ($f_{eff}$ de 1,824), il n'y a pas de gélification du milieu réactionnel.

Cette masse molaire obtenue permet d'émulsionner à chaud (80°C) cette résine dans l'eau en présence de tensioactifs naturels ou fossile et selon le procédé d'inversion d'émulsion d'eau dans l'huile (E/H) à l'huile dans l'eau (H/E).

EXEMPLE 7

On utilise un réacteur de laboratoire de 100 ml, chauffé à 220°C sous flux d'azote, dans lequel ont été introduits les produits réactionnels suivants :

- 31,37 g de Pripol 1040,
- 15,45 g d'acide adipique
- 40 g d'un monoacide issu de l'huile de tournesol de masse molaire égale à 282 g/mol,
- 19,48 g de glycérol, et
- du $Ca(OH)_2$ en quantité catalytique de l'ordre de 1,4 g,

Ce mélange réactionnel est caractérisé par :

◦ une longueur théorique en huile ($LH_{th}$) de 42,95% et
◦ une fonctionnalité effective ($f_{eff}$) de 1,997.

Les données initiales du mélange réactionnel sont récapitulées dans le tableau 9 ci-dessous :

Tableau 9

| PRODUITS | Mw (g/mol) | fonction. | Poids (g) | n (mole) | Equiv. (exp.) | Eau dég. (g) | Stoech. (exp) |
|---|---|---|---|---|---|---|---|
| PRIPOL 1040 | 890 | 3 | 31,15 | 0,035 | 0,105 | 0,63 | 1,00 |
| AcGTournesol | 282 | 1 | 40 | 0,1418 | 0,1418 | 2,553 | 4,05 |
| A.adipique | 146,14 | 2 | 16,5 | 0,1129 | 0,2258 | 2,032 | 3,23 |
| GLYCEROL | 92 | 3 | 13,3 | 0,1446 | 0,4337 | 2,602 | 4,13 |
| $f_{eff}$ =1,997 | $OH_{excess}$ | $LH_{th}$ = | $P_{tot}$ = | $mole_{tot}$ | EqaL=0,4337 | $m_{H2O}$ = | $Rd_{th}$ = |
| $H_{ind}$=23, 5 | 50,11% | 42,95 % | 100,95 | 0,4343 | EqaC=0,4727 | 7,818 | 92,26 % |

Après un chauffage à 220°C, pendant 2h, on obtient une résine alkyde présentant les propriétés suivantes :

∘ indice d'acide autour de 12,2.

∘ masse molaire moyenne en poids de 6501,4 g/mol,

∘ indice de polydispersité de 3,73.

∘ couleur ocre un peu foncé,

Les propriétés de la résine alkyde obtenue sont récapitulées dans le tableau 10 ci-après :

Tableau 10

| T (°C) | Vit. Agit tr/min | Durée (h) | $IA_{in}$ | $IA_f$ | acid. résid (%) | Indice Iode | % doubles liaisons restantes | quantité d'eau (g) | Visc (s) | Mp | lp |
|---|---|---|---|---|---|---|---|---|---|---|---|
| 200 | 328 | 2h | 217,1 | 12,2 | 5,6 | 79,3 | 63,38 | 6,5 | 5 | 6501,4 | 3,73 |

Pendant toute la durée de la polycondensation, on a vérifié qu'avec une fonctionnalité effective ($f_{eff}$) initiale du milieu réactionnel inférieure à 2 ($f_{eff}$ de 1,997), il n'y a pas de gélification du milieu réactionnel.

Cette masse molaire obtenue permet d'émulsionner à chaud (80°C) cette résine dans l'eau en présence de tensioactifs naturels et selon le procédé d'inversion d'émulsion d'eau dans l'huile (E/H) à l'huile dans l'eau (H/E).

EXEMPLE 8 (selon l'invention)

On utilise un réacteur de laboratoire de 250 ml, chauffé à 200°C sous flux d'azote, dans lequel ont été introduits les produits réactionnels suivants :

• 75 g de Pripol 1017,
• 36 g d'un monoacide issu de l'huile de tournesol de masse molaire égale à 282 g/mol,
• 13,52 g de glycérol, et
• Ca(OH)$_2$ en quantité catalytique (environ 1,5 g)

Ce mélange réactionnel est caractérisé par :

∘ une longueur théorique en huile ($LH_{th}$) de 30,63% et
∘ une fonctionnalité effective de 1,903

Après un chauffage à 200°C pendant 4 heures, on ajoute de l'acide lactique (1,2 g) et on obtient une résine alkyde au bout de 6h présentant les propriétés suivantes :

∘ masse molaire moyenne en poids autour de 15500 g/mol,
∘ indice de polydispersité d'environ 5,8.

Pendant toute la durée de la polycondensation, on a vérifié qu'avec une fonctionnalité effective ($f_{eff}$) initiale du milieu réactionnel inférieure à 2 ($f_{eff}$ de 1,903), il n'y a pas de gélification du milieu réactionnel.

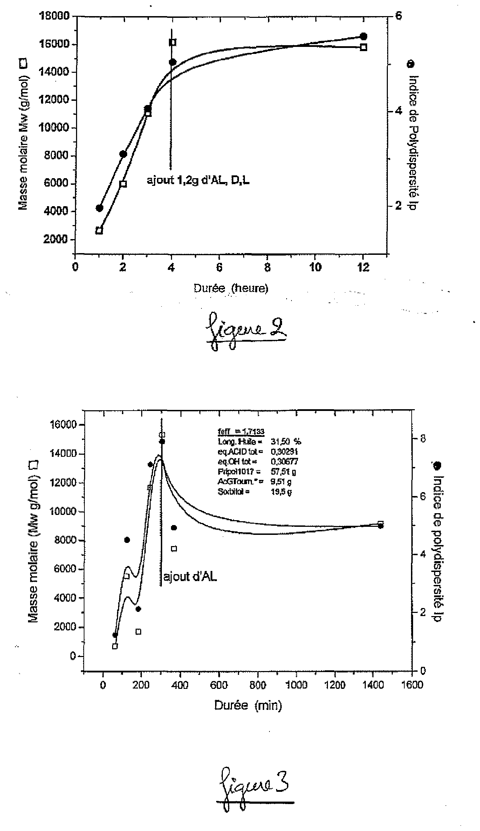

L'évolution de la masse molaire au cours du temps lors de la polycondensation est illustrée sur la figure 2, qui montre très clairement l'arrêt de la croissance de la masse molaire moyenne en poids Mp et l'indice de polydispersité Ip, dès l'introduction dans le milieu réactionnel de l'acide lactique.

Cette gamme de masse molaire obtenue permet d'émulsionner à chaud (80°C) cette résine dans l'eau en présence de tensioactifs naturels et selon le procédé d'inversion d'émulsion d'eau dans l'huile (E/H) à l'huile dans l'eau (H/E) .

EXEMPLE 9 (selon l'invention)

On utilise un réacteur de laboratoire de 100 ml, chauffé à 200°C sous flux d'azote dans lequel ont été introduits les produits réactionnels suivants :

- 57,51 g de Pripol 1017,
- 27,5 g d'un monoacide issu de l'huile de tournesol de masse molaire égale à 282 g/mol,
- 9,31 g de sorbitol, et
- Ca(OH)$_2$ en quantité catalytique,

Ce mélange réactionnel est caractérisé par :

  ◦ une longueur théorique en huile (LH$_{th}$) de 31,5% et
  ◦ une fonctionnalité effective de 1,7133

Après un chauffage à 200°C pendant 3h30 heures, on ajoute 1,2 g d'acide lactique et on obtient une résine alkyde au bout de 6h de chauffage présentant les propriétés suivantes :

  ◦ masse molaire moyenne en poids montant jusqu'à 15000 g/mol au bout de 5 heures, pour redescendre après l'ajout dans le milieu réactionnel de 1,2 d'acide lactique, à environ 9000 g/mol,
  ◦ indice de polydispersité d'environ 5.

Pendant toute la durée de la polycondensation, on a vérifié que la fonctionnalité effective ($f_{eff}$) du milieu réactionnel restait toujours inférieure à 2 (elle est de 1,71), il n'y a pas de gélification du milieu réactionnel.

L'évolution de la masse molaire au cours du temps lors de la polycondensation est illustrée sur la figure 3, qui montre l'efficacité de l'introduction d'acide lactique pour arrêter la croissance de la longueur moyenne des chaînes.

Cette gamme de masse molaire obtenue permet d'émulsionner à chaud (80°C) cette résine dans l'eau en présence de tensioactifs naturels et selon le procédé d'inversion d'émulsion d'eau dans l'huile (E/H) à l'huile dans l'eau (H/E).

EXEMPLE 10

On utilise un réacteur de laboratoire de 100 ml, chauffé à 220°C sous flux d'azote, dans lequel ont été introduits les produits réactionnels suivants :

- 20,9 g d'acide succinique, de masse molaire égale à 118,09 g/mol
- 50 g d'un monoacide issu de l'huile de tournesol de masse molaire égale à 282 g/mol,
- 24,4 g de glycérol, de masse molaire égale à 92 g/mol, et
- du Ca(OH)$_2$ en quantité catalytique de l'ordre de 1,4 g,

Ce mélange réactionnel est caractérisé par :

  ◦ une longueur théorique en huile (LH$_{th}$) de 59,42% et
  ◦ une fonctionnalité effective ($f_{eff}$) de 2,287.

Les données initiales du mélange réactionnel sont récapitulées dans le tableau 11 ci-après :

Tableau 11

| PRODUITS | Mw (g/mol) | fonction. | Poids (g) | n (mole) | Equiv. (exp.) | Eau dég. (g) | Stoech. (exp) |
|---|---|---|---|---|---|---|---|
| A.succinique | 118,09 | 2 | 20,9 | 0,1770 | 0,3540 | 3,1857 | 1,00 |
| AcGTournesol | 282 | 1 | 50 | 0,1773 | 0,1773 | 3,1915 | 1,00 |
| GLYCEROL | 92 | 3 | 24,4 | 0,2652 | 0,7957 | 4,7739 | 1,50 |
| $f_{eff}$ =2,287 | $OH_{excess}$ = | $H_{th}$ (%) = | $M_{tot}$ = | $mole_{tot}$ | EqaC=0,5313 | $m_{H2O}$ = | $Rd_{th}$ = |
| $H_{ind}$=179,26 | 25,14 % | 59,42 % | 95,3 | 0,6195 | EqaL=0,7957 | 11,1511 | 88,30 % |

Après un chauffage à 220°C, pendant 3h, on obtient une résine alkyde présentant les propriétés suivantes :

◦ indice d'acide autour de 9,9.

◦ masse molaire moyenne en poids de 31679,5 g/mol,

◦ indice de polydispersité de 8,5.

◦ couleur ocre plutôt clair,

Les propriétés de la résine alkyde obtenue sont récapitulées dans le tableau 12 ci-après :

Tableau 12

| T (°C) | Vit. Agit tr/min | Durée (h) | $IA_{in}$ | $IA_f$ | acid. résid (%) | Indice Iode | % doubles liaisons restantes | quantité d'eau (g) | Visc (s) | Mp | Ip |
|---|---|---|---|---|---|---|---|---|---|---|---|
| 185 à 210 | 333 | 3h 10 | 225 | 22 | 9,9 | 104x | 85,6 | 6 | x | 56% | 31679,5 |

Pendant toute la durée de la polycondensation, on a vérifié qu'avec une fonctionnalité effective ($f_{eff}$) initiale du milieu réactionnel supérieure à 2 ($f_{eff}$ de 2,287), il n'a pas été observé de gélification du milieu réactionnel.
Cette masse molaire obtenue permet d'émulsionner à chaud (80°C) cette résine dans l'eau en présence de tensioactifs naturels et selon le procédé d'inversion d'émulsion d'eau dans l'huile (E/H) à l'huile dans l'eau (H/E).

EXEMPLE 11

On émulsifie en phase aqueuse la résine alkyde de l'exemple 1 en utilisant à titre de tensioactifs le mélange suivant :

- le sulfonate de sodium, qui est un tensioactif anionique d'origine fossile, et
- la paraffine, qui est un tensioactif non ionique d'origine fossile.

La teneur pour chacun des tensioactifs est de 2 % en masse (g/g) par rapport au poids de l'émulsion, sachant que l'émulsion a un extrait sec de 50 %.
L'émulsification est réalisée selon un procédé d'émulsification à chaud en inversion de phase, qui se déroule comme suit :

- on conditionne l'ensemble des ingrédients à 80°C ;
- dans un réacteur sous agitation lente, on y introduit ensemble la résine alkyde de l'exemple 1 (résine masse assez fluide) et les tensioactifs ;
- on laisse l'agitation pendant au moins 10 minutes, puis on incorpore à débit lent l'eau préalablement chauffée à une température de 80°C, toujours sous agitation : il est important de garder un vortex pendant l'ensemble de l'opération ;
- au fur et à mesure de l'ajout de l'eau, on passe d'une émulsion de type eau dans huile (E/H) à une émulsion huile dans eau (H/E) en fin d'émulsification.

Le contrôle du passage de l'inversion de phase se fait à partir de l'extraction d'une petite quantité d'émulsion, partie qui sera ensuite reversée dans l'eau à la même température : cette petite fraction d'émulsion se dispersera relativement bien si l'émulsion est bien inversée, mais au contraire précipitera si l'on est encore en présence d'une dispersion d'eau dans l'huile.

On vérifie ensuite la stabilité dans le temps à température ambiante et la taille de particule qui doit être comprise entre 100 et 500 nm.

Enfin, la viscosité Brookfield selon la norme ISO 2884-2 est de 1,25 Pas (vitesse 12 Tige 2), la viscosité brookfield étant la mesure de la résistance mécanique d'un mobile (dit tige : ici tige 2) trempé dans liquide tournant à vitesse constante (dit vitesse : ici vitesse 12) sur lui-même.

L'extrait sec de cette résine émulsion est compris entre 50 et 55 %.

L'aspect liquide est laiteux

Le pH est compris entre 6,5 et 7,5

EXEMPLE 12

On émulsifie en phase aqueuse la résine alkyde de l'exemple 1 en utilisant la β-cyclodextrine, qui est un tensioactif d'origine naturelle.

La teneur en tensioactif est de 4% en masse (g/g) par rapport au poids de l'émulsion, sachant que l'émulsion a un extrait sec de 50 %.

L'émulsification est réalisée selon le même procédé d'émulsification que celui décrit à l'exemple 3 (procédé d'émulsification à chaud en inversion de phase).

On mesure enfin la viscosité Brookfield selon ISO 2884-2 : 1,5 Pas (Vitesse 12 Tige 2).

L'extrait sec de cette résine émulsion est compris entre 50 et 55 %.

L'aspect liquide est laiteux

Le pH est compris entre 6,5 et 7,5

EXEMPLE 13

On a réalisé une composition de peinture mate murale (murs intérieurs et extérieurs) à partir de l'émulsion aqueuse de résine alkyde de l'exemple 12 et d'additifs, dont la nature et la quantité est indiquée ci-après :

- eau : 28%
- mouillant végétal : 1 %
- $TiO_2$ : 17 %
- $CaCO_3$ : 40 %
- Résine alkyde émulsion (exemple 12) : 12 %
- biocide naturel dilué : 1%
- épaississant végétal 1 %.

Les performances de cette composition de peinture sont indiquées dans le tableau 13 ci-après :

Tableau 13

| Essais | Norme | Résultats |
|---|---|---|
| Limite de coulure | Raclette BYK | > 300 |
| Durée de séchage en surface | NF ISO 1517 | 12 minutes |
| Adhérence directe sur support | ISO 2409 | |
| fer | | 1 |
| Placoplatre | | 0 |
| PVC | | 1 |
| Bois (sapin) | | 0 |
| Opacité (sous 100 $\mu$m) | ISO 2814 | 0,96 |

(suite)

| Essais | Norme | Résultats |
|---|---|---|
| Aspect du film | | Uniformité : bonne<br>Absence de cordage<br>Absence de grains<br>Absence d'oeil<br>Tendu : bon<br>Absence de farinage |
| Brillance 60° (sous 100 $\mu$m) | NF EN ISO 2813 | 2,5 |
| Composantes de couleur | NF EN ISO 7724-2 | L : 95,18<br>a : - 0,57<br>b : 2,21<br>degré de blanc : 85,3 |
| Lavabilité | EN ISO 11998 | > 10 $\mu$m |
| Résistance aux chocs | NF EN ISO 6272 | Pour 1 kg : 80 cm |
| QUV 500H | ISO 11507 | pas de défaut et perte de brillance inférieur à 20 %. |

**Revendications**

**1.** Procédé de préparation d'une résine alkyde synthétisée à partir exclusivement de produits végétaux d'origine naturelle et présentant :

- un indice de polydispersité Ip compris entre 1 et 20 ;
- une masse molaire moyenne en poids Mp comprise entre 3000 g/mol et 70000 g/mol ;
- un indice d'acide compris entre 5 et 15 ;
- une viscosité dynamique comprise entre 10 et 50 dPas à 80°C ; et
- une longueur moyenne théorique en huile comprise entre 25% 65% ;

laquelle résine étant obtenue par polycondensation de produits de départ, exempts de métaux lourds, comprenant au moins un polyol, au moins un polyacide et au moins une huile et/ou un acide gras,
**caractérisé en ce que** :

• l'huile est choisie parmi les huiles végétales siccatives et/ou semi-siccatives, et l'acide gras est choisi parmi les acides gras entrant dans la composition desdites huiles végétales siccatives et/ou semi-siccatives,
• le polyacide est d'origine naturelle,
• le polyol est d'origine naturelle,

et **en ce que** lesdits produits de départ sont mélangés dynamiquement en continu à une température comprise entre 180°C et 220°C jusqu'à formation de la résine alkyde modifiée ;
et **caractérisé en ce que** le procédé comporte un contrôle simultané de la masse molaire et de l'indice de polydispersité, qui est réalisé par ajout, au cours de la préparation de la résine, d'un catalyseur bloqueur de chaîne, ledit catalyseur étant choisi dans le groupe constitué par le poly(acide lactique), l'acide lactique et l'acide gluconique.

**2.** Procédé selon la revendication 1, **caractérisé en ce que** les produits de départ comportent au moins une huile siccative choisie dans le groupe constitué par l'huile de lin, l'huile de bois de chine, l'huile d'oiticica.

**3.** Procédé selon la revendication 1, **caractérisé en ce que** les produits de départ comportent au moins une huile semi-siccative choisie dans le groupe constitué par l'huile de soja, l'huile de tournesol, l'huile de carthame, l'huile de pépin de raisin, l'huile de carnauba, ou l'huile de calandula.

**4.** Procédé selon la revendication 1, caractérisé en ce les produits de départ comportent au moins un acide gras entrant dans la composition d'une huile végétale semi-siccative choisie dans le groupe constitué par l'acide oléique, l'acide linoléique, et l'acide linolénique.

5. Procédé selon l'une quelconque des revendications 1 à 4, **caractérisé en ce que** le polyacide est choisi parmi les oligomères d'acide gras végétal, l'acide succinique et l'acide adipique.

6. Composition aqueuse de peinture ou de revêtement de surface, **caractérisée en ce qu'**elle comporte une émulsion aqueuse d'une résine alkyde obtenue par le procédé selon l'une des revendications 1 à 5.

7. Composition selon la revendication 6, **caractérisée en ce qu'**elle consiste en une peinture mate murale (intérieure et extérieure) ou pour plafonds comportant une émulsion aqueuse d'une résine alkyde obtenue par le procédé selon l'une des revendications 1 à 5 **caractérisée par** une longueur théorique en huile entre 38% et 42%.

8. Composition selon la revendication 6, **caractérisée en ce qu'**elle consiste en une peinture satinée pour huisseries en bois ou en métal comportant une émulsion aqueuse d'une résine alkyde obtenue par le procédé selon l'une des revendications 1 à 5 **caractérisée par** une longueur théorique en huile entre 33% et 38%.

9. Composition selon la revendication 6, **caractérisée en ce qu'**elle consiste en une peinture de revêtement de sols ou pour bandes routières comportant une émulsion aqueuse d'une résine alkyde obtenue par le procédé selon l'une des revendications 1 à 5 **caractérisée par** une longueur théorique en huile entre 25% et 55%.

## Patentansprüche

1. Zubereitungsverfahren eines Alkydharzes, das ausschließlich aus pflanzlichen Produkten natürlichen Ursprungs synthetisiert wird und Folgendes aufweist:

   - einen Polydispersitätsindex PDI zwischen 1 und 20;
   - eine gewichtsgemittelte molare Masse Mm zwischen 3000 g/Mol und 70 000 g/Mol;
   - einen Säureindex zwischen 5 und 15;
   - eine dynamische Viskosität bei 80 °C zwischen 10 und 50 dPas; und
   - einen mittleren theoretischen Ölgehalt zwischen 25 % und 65 %;

   wobei das Harz durch Polykondensation der Ausgangsprodukte, frei von Schwermetallen, erhalten wird, umfassend mindestens ein Polyol, mindestens eine Polysäure und mindestens ein Öl und/oder eine Fettsäure, **dadurch gekennzeichnet, dass**:

   - das Öl gewählt ist aus trocknenden und/oder halbtrocknenden Pflanzenölen, und die Fettsäure gewählt ist aus den Fettsäuren, welche die Zusammensetzung der trocknenden oder halbtrocknenden Pflanzenöle ausmachen,
   - die Polysäure natürlichen Ursprungs ist,
   - das Polyol natürlichen Ursprungs ist,

   und dadurch, dass die Ausgangsprodukte kontinuierlich bei einer Temperatur zwischen 180 °C und 220 °C dynamisch bis zur Bildung des modifizierten Alkydharzes gemischt werden; und **dadurch gekennzeichnet, dass** das Verfahren eine gleichzeitige Steuerung der molaren Masse und des Polydispersitätsindexes umfasst, was durch Hinzufügen eines Kettenblockierungskatalysators im Verlauf der Zubereitung des Harzes realisiert wird, wobei der Katalysator gewählt wird aus der Gruppe, bestehend aus Polymilchsäure, Milchsäure und Gluconsäure.

2. Verfahren nach Anspruch 1, **dadurch gekennzeichnet, dass** die Ausgangsprodukte mindestens ein trocknendes Öl umfassen, gewählt aus der Gruppe, bestehend aus Leinöl, Tungöl, Oiticicaöl.

3. Verfahren nach Anspruch 1, **dadurch gekennzeichnet, dass** die Ausgangsprodukte mindestens ein halbtrocknendes Öl umfassen, gewählt aus der Gruppe, bestehend aus Sojaöl, Sonnenblumenöl, Safloröl, Traubenkernöl, Carnaubaöl oder Calendulaöl.

4. Verfahren nach Anspruch 1, **dadurch gekennzeichnet, dass** die Ausgangsprodukte mindestens eine Fettsäure, die die Zusammensetzung eines halbtrocknenden Pflanzenöls ausmacht, umfassen, gewählt aus der Gruppe, bestehend aus Oleinsäure, Linolsäure und Linolensäure.

**5.** Verfahren nach einem der Ansprüche 1 bis 4, **dadurch gekennzeichnet, dass** die Polysäure gewählt ist aus den Oligomeren pflanzlicher Fettsäure, Bernsteinsäure und Adipinsäure.

**6.** Wässrige Farb- oder Oberflächenbelagszusammensetzung, **dadurch gekennzeichnet, dass** sie eine wässrige Emulsion eines durch das Verfahren nach einem der Ansprüche 1 bis 5 erhaltenen Alkydharzes umfasst.

**7.** Zusammensetzung nach Anspruch 6, **dadurch gekennzeichnet, dass** sie aus einer matten Wandfarbe (außen und innen) oder Farbe für Decken besteht, umfassend eine wässrige Emulsion eines durch das Verfahren nach einem der Ansprüche 1 bis 5 erhaltenen Alkydharzes, **gekennzeichnet durch** einen theoretischen Ölgehalt zwischen 38 % und 42 %.

**8.** Zusammensetzung nach Anspruch 6, **dadurch gekennzeichnet, dass** sie aus einer Satinfarbe für Holz-oder Metallrahmen besteht, umfassend eine wässrige Emulsion eines durch das Verfahren nach einem der Ansprüche 1 bis 5 erhaltenen Alkydharzes, **gekennzeichnet durch** einen theoretischen Ölgehalt zwischen 33 % und 38 %.

**9.** Zusammensetzung nach Anspruch 6, **dadurch gekennzeichnet, dass** sie aus einer Farbe für Bödenbeläge oder für Straßenstreifen besteht, umfassend eine wässrige Emulsion eines durch das Verfahren nach einem der Ansprüche 1 bis 5 erhaltenen Alkydharzes, **gekennzeichnet durch** einen theoretischen Ölgehalt zwischen 25 % und 55 %.

**Claims**

**1.** Method for preparing an alkyd resin synthesised exclusively from natural plant materials and having:

- a polydispersity Ip between 1 and 20;
- a weight average molar mass Mp between 3000 g/mol and 70,000 g/mol;
- an acid value between 5 and 15;
- a dynamic viscosity between 10 and 50 dPas at 80 °C; and
- an average theoretical oil length between 25% and 65%; said resin being obtained by polycondensation of starting materials, free of heavy metals, comprising at least one polyol, at least one polyacid and at least one oil and/or one fatty acid,

**characterised in that**:

- the oil is selected from the siccative and/or semi-siccative vegetable oils, and the fatty acid is selected from among the fatty acids included in the composition of said siccative and/or semi-siccative vegetable oils,
- the polyacid is of natural origin,
- the polyol is of natural origin,

and **in that** said starting materials are continuously dynamically mixed at a temperature between 180 °C and 220 °C until formation of the modified alkyd resin;
and **characterised in that** the method comprises a simultaneous control of the molar mass and the polydispersity, which is carried out by adding, in the course of the resin preparation, a chain blocking catalyst selected from the group consisting of poly(lactic acid), lactic acid and gluconic acid.

**2.** Method according to claim 1, **characterised in that** the starting materials comprise at least one siccative oil selected from the group consisting of linseed oil, tung oil and oiticica oil.

**3.** Method according to claim 1, **characterised in that** the starting materials comprise at least one semi-siccative oil chosen from the group consisting of soybean oil, sunflower oil, safflower oil, grape seed oil, carnauba oil or calendula oil.

**4.** Method according to claim 1, **characterised in that** the starting materials comprise at least one fatty acid included in the semi-siccative vegetable oil composition, selected from the group consisting of oleic acid, linoleic acid and linolenic acid.

**5.** Method according to any one of claims 1 to 4, **characterised in that** the polyacid is selected from the vegetable fatty acid oligomers, succinic acid and adipic acid.

6. Aqueous composition for painting or coating a surface, **characterised in that** it comprises an aqueous emulsion of an alkyd resin obtained by the method according to one of claims 1 to 5.

7. Composition according to claim 6, **characterised in that** it consists of a matte (interior or exterior) wall paint, or paint for ceilings, comprising an aqueous emulsion of an alkyd resin obtained by the method according to one of claims 1 to 5, **characterised in that** the theoretical oil length is between 38% and 42%.

8. Composition according to claim 6, **characterised in that** it consists of a satin paint for wood or metal frames, comprising aqueous emulsion of an alkyd resin obtained by the method according to claims 1 to 5, **characterised by** a theoretical oil length between 33% and 38%.

9. Composition according to claim 6, **characterised in that** it consists of a floor coating paint or paint for road markings, comprising an aqueous emulsion of an alkyd resin obtained by the method according to claims 1 to 5, **characterised by** a theoretical oil length between 25% and 55%.

Figure 1

figure 2

figure 3